# EUROPÄISCHE PATENTSCHRIFT

(11) **EP 3 298 798 B1**
(45) Veröffentlichungstag und Bekanntmachung des Hinweises auf die Patenterteilung: **12.02.2020**
(21) Anmeldenummer: 16720078.1
(22) Anmeldetag: 22.04.2016
(51) Int. Cl.: H04Q 9/04

(54) **VERFAHREN UND VORRICHTUNG ZUR SENSORSYNCHRONISIERUNG**
METHOD AND DEVICE FOR SYNCHRONIZATION OF SENSORS
PROCÉDÉ ET DISPOSITIF DE SYNCHRONISATION DES CAPTEURS

(30) Priorität: 19.05.2015 DE 102015209129
(43) Veröffentlichungstag der Anmeldung: 28.03.2018
(73) Patentinhaber: Robert Bosch GmbH, 70442 Stuttgart (DE)
(72) Erfinder: CVEJANOVIC, Dorde, 81825 Muenchen (DE); HAYEK, Jan, 81827 Muenchen (DE)
(86) Internationale Anmeldenummer: PCT/EP2016/059060
(87) Internationale Veröffentlichungsnummer: WO 2016/184641

(56) Entgegenhaltungen:
- WO-A1-2013/160073
- US-B1- 7 333 725
- TAE-WON CHUN ET AL: "Algorithms for Minimizing the Effect of Network Delay of Sensor Data in Network-Based AC Motor Drive", IEEE INDUSTRIAL ELECTRONICS, IECON 2006 - 32ND ANNUAL CONFERENCE ON, IEEE, PISCATAWAY, NJ, USA, 1. November 2006 (2006-11-01), Seiten 4627-4631, XP031077341, ISBN: 978-1-4244-0135-2

## Beschreibung

### Stand der Technik

Die Erfindung geht aus von einem Verfahren zur Sensorsynchronisierung, bei welcher die Latenz bestimmt wird und wenigstens ein erster Messwerte eines ersten Sensors synchron zu einem zweiten Messwert eines zweiten Sensors ausgegeben wird.

Die Erfindung geht außerdem aus von einer Vorrichtung zur Sensorsynchronisierung mit wenigstens einem ersten Sensor und einem zweiten Sensor, einem zentralen Timer und einer Verarbeitungseinheit. Hierbei ist die Vorrichtung dazu eingerichtet, eine erste Latenz eines ersten Sensors und eine zweite Latenz eines zweiten Sensors zu bestimmen. Zudem sind der erste Sensor und der zweite Sensor dazu eingerichtet, einen ersten Messwert und einen zweiten Messwert synchron zueinander auszugeben.

Eine gattungsgemäßes Verfahren und eine gattungsgemäße Vorrichtung sind beispielsweise in der Patentschrift US 7333725 B1 offenbart. TAE-WON CHUN ET AL: "Algorithms for Minimizing the Effect of Network Delay of Sensor Data in Network-Based AC Motor Drive" in IECON 2006 - 32ND ANNUAL CONFERENCE ON, IEEE, PISCATAWAY, NJ, USA, 1. November 2006 (2006-11-01), Seiten 4627-4631; ISBN: 978-1-4244-0135-2 offenbart drei Sensormodule einer Motorsteuerung. Jedes des Sensormodule ist mit einem Timer ausgestattet. Die Timer werden zeitgleich zurückgesetzt. WO2013/160073 (Robert Bosch) offenbart Zeitsynchronisierung von Sensoren, die ein erstes und ein zweites Register umfassen. Das erste Register ist zur Hinterlegung einer Sensorzeit und extern auslesbar. Das zweite Register ist extern beschreibbar und erlaubt die Einstellung der Phasenlage und/oder der Periode der Daten-Samples.

### Offenbarung der Erfindung

Die Erfindung geht aus von einem Verfahren zur Sensorsynchronisierung, bei welcher die Latenz bestimmt wird und wenigstens ein erster Messwerte eines ersten Sensors synchron zu einem zweiten Messwert eines zweiten Sensors ausgegeben wird.
Der Kern des erfindungsgemäßen Verfahrens besteht darin, dass eine erste Datenrate des ersten Sensors und eine zweiten Datenrate des zweiten Sensors erfasst werden, wobei die erste Datenrate zur zweiten Datenrate im Verhältnis von 2ⁿ steht, wobei n ein Element aus der Menge der natürlichen Zahlen N₀ ist. Zudem wird ein zentraler Timer gestartet. Des Weiteren werden ein erster Countdown-Timer in Abhängigkeit von einem Wert des zentralen Timers und der ersten Datenrate und ein zweiter Countdown-Timer in Abhängigkeit vom Wert des zentralen Timers und der zweiten Datenrate erzeugt. Der erste Countdown-Timer wird für den ersten Sensor und der zweite Countdown-Timer wird für den zweiten Sensor bereitgestellt, wobei der erste Sensor spätestens mit seiner Messung beginnt, wenn die erste Latenz gleich dem Wert des ersten Countdown-Timers ist, und wobei der zweite Sensor spätestens mit seiner Messung beginnt, wenn die zweite Latenz gleich dem Wert des zweiten Countdown-Timers ist.
Vorteilhaft ist hierbei, dass alle Sensoren synchron zueinander sind und ein festes Verhältnis der Datenrate von 2ⁿ aufweisen. Durch diese Bedingung an die Datenraten können die Sensoren entsprechend synchronisiert werden. Des Weiteren kann jeweils die Zeitspanne zwischen Start der Messung und der Ausgabe des erfassten Messwerts geringstmöglich gehalten werden. Zudem wird durch die Erzeugung der Countdown-Timer in Abhängigkeit vom zentralen Timer und der Datenrate des jeweiligen Sensors erreicht, dass es keinen Jitter oder Versatz des Zeitpunkts gibt, an dem Messwerte ausgegeben werden. Hierdurch wird erzielt, dass wenn ein Messwert für einen bestimmten Sensor vorhanden ist, auch alle Messwerte von anderen Sensoren vorhanden sind, die mit gleicher oder höherer Datenrate arbeiten.

In einer vorteilhaften Ausgestaltung des erfindungsgemäßen Verfahrens ist vorgesehen, dass die erste Latenz bestimmt wird, indem die Zeitdauer vom Ansprechen des ersten Sensors bis zur Ausgabe des ersten Messwerts gemessen wird, oder auch dass die zweite Latenz bestimmt wird, indem die Zeitdauer vom Ansprechen des zweiten Sensors bis zur Ausgabe des zweiten Messwerts gemessen wird.
Vorteilhaft ist hierbei, dass die Latenz besonders einfach durch Stoppen der Zeit zwischen Messbeginn und Ausgabe des Messwerts bestimmt werden kann.

In einer weiteren vorteilhaften Ausgestaltung des erfindungsgemäßen Verfahrens ist vorgesehen, dass die erste Latenz bestimmt wird, indem die Zeitdauer vom Ansprechen des ersten Sensors bis zur Ausgabe des ersten Messwerts in Abhängigkeit der Konfiguration des ersten Sensors aus einer Tabelle ermittelt wird, oder auch dass die zweite Latenz bestimmt wird, indem die Zeitdauer vom Ansprechen des zweiten Sensors bis zur Ausgabe des zweiten Messwerts in Abhängigkeit der Konfiguration des zweiten Sensors aus einer Tabelle ermittelt wird.
Vorteilhaft ist hierbei, dass die Latenz mittels einer Tabelle und auf Grund der Konfiguration des Sensors sehr gut abgeschätzt werden kann. Solch eine Abschätzung lässt sich besonders schnell und einfach durchführen. Zudem können mögliche Änderungen der Konfiguration, beispielsweise weitere Filterschritte, in die Bestimmung mit einfließen und so die Bestimmung der Latenz an den aktuellen Messvorgang angepasst werden.

In einer weiteren vorteilhaften Ausgestaltung des erfindungsgemäßen Verfahrens ist vorgesehen, dass der erste Countdown-Timer und der zweite Countdown-Timer erzeugt werden, indem der Wert des zentralen Timers (50) Bit-weise invertiert wird und abhängig von der ersten Datenrate eine erste Anzahl an unteren Bits für den ersten Countdown-Timer und abhängig von der zweiten Datenrate eine zweite Anzahl an unteren Bits für den zweiten Countdown-Timer genutzt werden.
Vorteilhaft ist hierbei, dass der erste und zweite Countdown-Timer möglichst einfach vom zentralen Timer erzeugt werden kann und hierbei die Datenraten mit einfließen. Zudem sind die beiden Countdown-Timer durch diese Implementierung auch synchron.

Eine vorteilhafte Ausgestaltung des erfindungsgemäßen Verfahrens sieht vor, dass der erste Sensor nach Ausgabe des ersten Messwerts in einen Schlafmodus versetzt wird, wenn die erste Latenz kleiner als der Kehrwert der ersten Datenrate ist, oder auch dass der zweite Sensor nach Ausgabe des zweiten Messwertes in einen Schlafmodus versetzt wird, wenn die zweite Latenz kleiner als der Kehrwert der zweiten Datenrate ist.
Vorteilhaft ist hierbei, dass durch den Schlafmodus Energie eingespart werden kann und der Sensor nur misst, wenn dies nötig ist. Dies schont zudem den Sensor und schützt ihn vor einer dauerhaften Beanspruchung.

Eine weitere vorteilhafte Ausgestaltung des erfindungsgemäßen Verfahrens sieht vor, dass der erste Sensor spätestens aufgeweckt wird, wenn der Wert des ersten Countdown-Timers der ersten Latenz entspricht, oder auch dass der zweite Sensor spätestens aufgeweckt wird, wenn der Wert des zweiten Countdown-Timers der zweiten Latenz entspricht.
Vorteilhaft ist hierbei, dass der Sensor zum spätmöglichsten Zeitpunkt aufgeweckt werden kann, an dem eine Messung bis zum Ablauf des Countdown-Timers noch möglich ist. Hierdurch kann Energie eingespart werden und zudem muss der Sensor nur im Bedarfsfall aktiviert werden.

Gemäß einer vorteilhaften Ausgestaltung des erfindungsgemäßen Verfahrens ist vorgesehen, dass der erste Messwerte und der zweite Messwert, welche zeitgleich ausgegeben werden, zu einem Datenpaket zusammengefasst werden, wobei insbesondere das Datenpaket mit einem Zeitstempel versehen wird. Vorteilhaft ist hierbei, dass das Datenpaket, welches die zeitgleich ausgegebenen Messwerte beinhaltet, besonders einfach weiterverarbeitet werden kann.

Gemäß einer weiteren vorteilhaften Ausgestaltung des erfindungsgemäßen Verfahrens ist vorgesehen, dass das Datenpaket an einen FIFO-Speicher übermittelt wird.
Vorteilhaft ist hierbei, dass im FIFO-Speicher die erfassten Messwerte als Datenpakete abgespeichert werden. Hierbei werden beispielsweise jeweils die ältesten Messwerte überschrieben, welche üblicherweise am wenigsten relevant sind. Allerdings sind auch weitere Betriebsmodi des FIFOs denkbar.

Die Erfindung geht auch aus von einer Vorrichtung zur Sensorsynchronisierung mit wenigstens einem ersten Sensor und einem zweiten Sensor, einem zentralen Timer und einer Verarbeitungseinheit. Hierbei ist die Vorrichtung dazu eingerichtet, eine erste Latenz eines ersten Sensors und eine zweite Latenz eines zweiten Sensors zu bestimmen. Zudem sind der erste Sensor und der zweite Sensor dazu eingerichtet, einen ersten Messwert und einen zweiten Messwert synchron zueinander auszugeben. Der Kern der erfindungsgemäßen Vorrichtung besteht darin, dass die Verarbeitungseinheit dazu eingerichtet ist, eine erste Datenrate des ersten Sensor sowie eine zweite Datenrate des zweiten Sensors zu erfassen, wobei die erste Datenrate zur zweiten Datenrate im Verhältnis von 2ⁿ steht, wobei n ein Element aus der Menge der natürlichen Zahlen N₀ ist. Zudem ist die Verarbeitungseinheit dazu eingerichtet, den zentralen Timer zu starten, einen ersten Countdown-Timer in Abhängigkeit von einem Wert des zentralen Timers und der ersten Datenrate zu erzeugen sowie einen zweiten Countdown-Timer in Abhängigkeit vom Wert des zentralen Timers und der zweiten Datenrate zu erzeugen. Des Weiteren ist die Verarbeitungseinheit dazu eingerichtet, den ersten Countdown-Timer für den ersten Sensor sowie den zweiten Countdown-Timer für den zweiten Sensor bereit zu stellen, wobei der erste Sensor spätestens mit der Messung beginnt, wenn die erste Latenz gleich dem Wert des ersten Countdown-Timers ist, und wobei der zweite Sensor spätestens mit der Messung beginnt, wenn die zweite Latenz gleich dem Wert des zweiten Countdown-Timers ist.
Vorteilhaft ist hierbei, dass alle Sensoren synchron zueinander sind und ein festes Verhältnis der Datenrate von 2ⁿ aufweisen. Durch diese Bedingung an die Datenraten können die Sensoren entsprechend synchronisiert werden. Des Weiteren kann jeweils die Zeitspanne zwischen Start der Messung und der Ausgabe des erfassten Messwerts geringstmöglich gehalten werden.

Eine vorteilhafte Ausgestaltung der Erfindung sieht vor, dass der erste Sensor oder die Verarbeitungseinheit dazu eingerichtet ist, die erste Latenz durch Messung der Zeitdauer vom Ansprechen des ersten Sensors bis zur Ausgabe des ersten Messwerts zu bestimmen, oder auch der zweite Sensor oder die Verarbeitungseinheit dazu eingerichtet ist, die zweite Latenz durch Messung der Zeitdauer vom Ansprechen des zweiten Sensors bis zur Ausgabe des zweiten Messwerts zu bestimmen.
Vorteilhaft ist hierbei, dass die Latenz besonders einfach durch Stoppen der Zeit zwischen Messbeginn und Ausgabe des Messwerts bestimmt werden kann.

Eine weitere vorteilhafte Ausgestaltung der Erfindung sieht vor, dass der erste Sensor oder die Verarbeitungseinheit dazu eingerichtet ist, die erste Latenz durch Ermittlung der Zeitdauer vom Ansprechen des ersten Sensors bis zur Ausgabe des ersten Messwerts in Abhängigkeit der Konfiguration des ersten Sensors aus einer Tabelle zu bestimmen oder auch der zweite Sensor oder die Verarbeitungseinheit dazu eingerichtet ist, die zweite Latenz durch Ermittlung der Zeitdauer vom Ansprechen des zweiten Sensors bis zur Ausgabe des zweiten Messwerts in Abhängigkeit der Konfiguration des zweiten Sensors aus einer Tabelle zu bestimmen.

Vorteilhaft ist hierbei, dass die Latenz mittels einer Tabelle und auf Grund der Konfiguration des Sensors sehr gut abgeschätzt werden kann. Solch eine Abschätzung lässt sich besonders schnell durchführen. Zudem können mögliche Änderungen der Konfiguration, beispielsweise weitere Filterschritte, in die Bestimmung mit einfließen und so die Bestimmung der Latenz an den aktuellen Messvorgang angepasst werden.

Gemäß einer vorteilhaften Ausgestaltung der Erfindung ist vorgesehen, dass der erste Sensor dazu eingerichtet ist, nach Ausgabe des ersten Messwertes in einen Schlafmodus überzugehen, wenn die erste Latenz kleiner als der Kehrwert der ersten Datenrate ist, oder auch dass der zweite Sensor dazu eingerichtet ist, nach Ausgabe des zweiten Messwertes in einen Schlafmodus überzugehen, wenn die zweite Latenz kleiner als der Kehrwert der zweiten Datenrate ist. Vorteilhaft ist hierbei, dass durch den Schlafmodus Energie eingespart werden kann und der Sensor nur misst, wenn dies nötig ist. Dies schont zudem den Sensor und schützt ihn vor einer dauerhaften Beanspruchung.

Gemäß einer weiteren vorteilhaften Ausgestaltung der Erfindung ist vorgesehen, dass der erste Sensor dazu eingerichtet ist, spätestens aufgeweckt zu werden, wenn der Wert des ersten Countdown-Timers der ersten Latenz entspricht, oder auch dass der zweite Sensor dazu eingerichtet ist, spätestens aufgeweckt zu werden, wenn der Wert des zweiten Countdown-Timers der zweiten Latenz entspricht.
Vorteilhaft ist hierbei, dass der Sensor zum spätmöglichsten Zeitpunkt aufgeweckt werden kann, an dem eine Messung bis zum Ablauf des Countdown-Timers noch möglich ist. Hierdurch kann Energie eingespart werden und zudem muss der Sensor nur im Bedarfsfall aktiviert werden.

In einer vorteilhaften Ausführungsform ist vorgesehen, dass die Vorrichtung einen FIFO-Speicher aufweist, wobei die Verarbeitungseinheit dazu eingerichtet ist, den ersten Messwert und den zweiten Messwert, welche gleichzeitig ausgegeben werden, als Datenpakete an den FIFO-Speicher zu übermitteln, wobei das Datenpaket insbesondere mit einem Zeitstempel versehen ist. Vorteilhaft ist hierbei, dass im FIFO-Speicher die erfassten Messwerte als Datenpakete abgespeichert werden. Hierbei werden jeweils die ältesten Messwerte überschrieben, welche üblicherweise am wenigsten relevant sind.

### Zeichnungen

Fig. 1 zeigt ein erstes Ausführungsbeispiel einer erfindungsgemäßen Vorrichtung.
Fig. 2 zeigt ein erstes Ausführungsbeispiel eines erfindungsgemäßen Betriebsverfahrens.

### Beschreibung von Ausführungsbeispielen

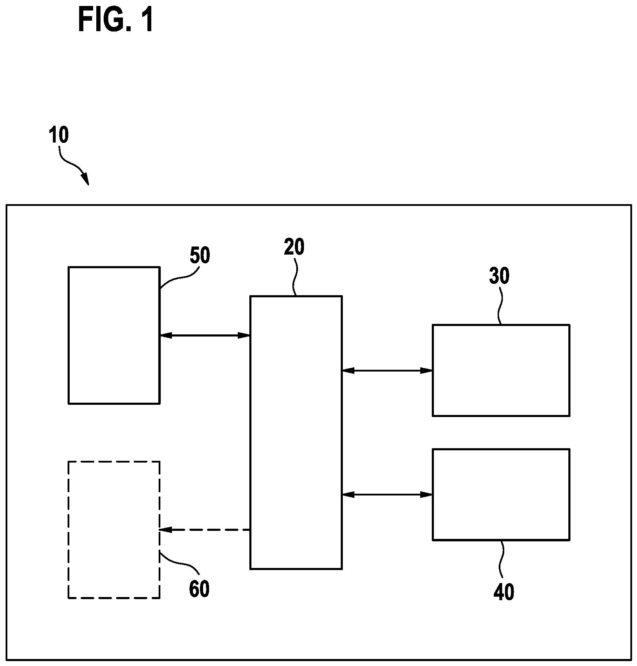

Fig. 1 zeigt ein erstes Ausführungsbeispiel einer erfindungsgemäßen Vorrichtung. Dargestellt ist eine Vorrichtung 10 mit einer Verarbeitungseinheit 20. Die Verarbeitungseinheit 20 ist beispielweise als Mikrocontroller ausgestaltet. Die Vorrichtung 10 weist zudem einen ersten Sensor 30 und einen zweiten Sensor 40 auf, welche jeweils bidirektional mit der Verarbeitungseinheit 20 verbunden sind. Über diese bidirektionale Verbindung können die Sensoren 30, 40 von der Verarbeitungseinheit 20 angesprochen oder auch Daten an die Sensoren 30, 40 übermittelt werden und zudem können Messwerte von den Sensoren 30, 40 an die Verarbeitungseinheit 20 übermittelt werden. Zudem weist die Vorrichtung 10 einen zentralen Timer 50 auf, welcher ebenfalls bidirektional mit der Verarbeitungseinheit 20 verbunden ist. Über diese bidirektionale Verbindung kann zum Einen der zentrale Timer 50 von der Verarbeitungseinheit 20, typischerweise einmalig, gestartet werden und zum Anderen kann darüber ein Wert des zentralen Timers 50 an die Verarbeitungseinheit 20 übermittelt werden. Der zentrale Timer 50 ist dabei vorzugsweise als einfacher Zähler implementiert, welcher mit einer vorgegebenen Frequenz hochzählt. Optional weist die Vorrichtung noch einen FIFO-Speicher 60 auf, welches derart mit der Verarbeitungseinheit 20 verbunden, dass wenigstens die Verarbeitungseinheit 20 Daten an den FIFO-Speicher 60 übermitteln kann. Zudem kann entweder von der Verarbeitungseinheit 20 oder von extern auf den FIFO-Speicher 60 zugegriffen werden, was jedoch bildlich nicht dargestellt ist.

In einem alternativen, bildlich nicht dargestellten Ausführungsbeispiel sind der erste Sensor 30 und der zweite Sensor 40 derart mit der Verarbeitungseinheit 20 verbunden, dass nur Daten von der Verarbeitungseinheit 20 aus an die Sensoren 30, 40 übermittelt werden können. In diesem Fall weisen der erste Sensor 30 und der zweite Sensor 40 jedoch eine Datenleitung auf, welche aus der Vorrichtung 10 herausführt und von extern abgegriffen werden kann, um den ersten Messwert und den zweiten Messwert abgreifen zu können.

In einem weiteren alternativen, bildlich nicht dargestellten Ausführungsbeispiel kann die Vorrichtung 10 noch beliebig viele weitere Sensoren aufweisen, welche wie der erste Sensor 30 bzw. wie der zweite Sensor 40 mit der Verarbeitungseinheit 20 verbunden sind.

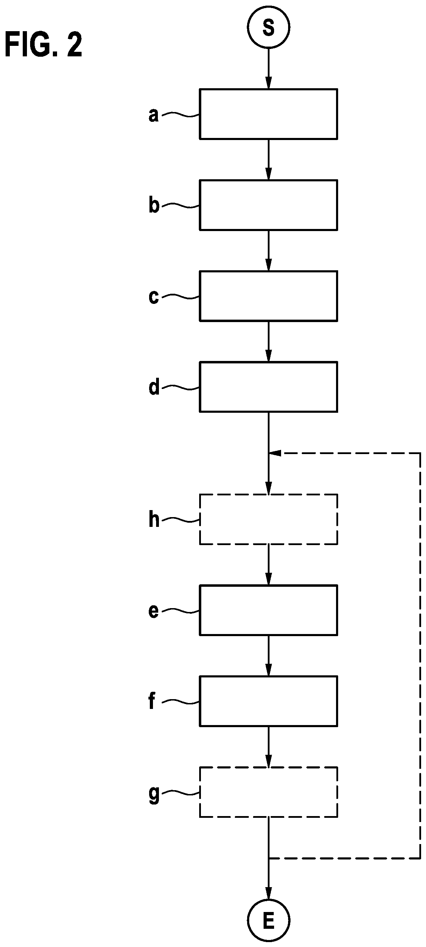

Fig. 2 zeigt ein erstes Ausführungsbeispiel eines erfindungsgemäßen Betriebsverfahrens. Zu Beginn des Verfahrens wird in einem Verfahrensschritt a eine erste Latenz eines ersten Sensors 30 und eine zweite Latenz eines zweiten Sensors 40 bestimmt. Eine Latenz kann hierbei beispielsweise bestimmt werden, indem die Zeitspanne gemessen wird, welche ein Sensor vom Ansprechen des Sensors bis hin zur Ausgabe des Messwerts benötigt. Alternativ kann die Latenz auch anhand der Konfiguration des Sensors und mittels einer Tabelle bestimmt werden. Hierbei ist es nötig, zu wissen, welche Konfiguration der jeweilige Sensor aufweist. Unter Konfiguration wird hierbei die Kombination von einzelnen Schritten des Messverfahrens eines Sensors verstanden, beispielsweise Filterschritte oder Interpolationsberechnungen. Die Zeiten eines jeden möglichen Schrittes werden vor Verfahrensbeginn durch Messen oder Abschätzen erfasst, diese Zeiten dann einzeln in eine Tabelle eingetragen und daraus anschließend im Verfahrensschritt a die Latenz bestimmt. Es ist auch möglich diese Alternativen zur Bestimmung der Latenz zu Mischen und somit beispielsweise die erste Latenz anders als die zweite Latenz zu bestimmen. Des Weiteren wird in einem anschließenden Verfahrensschritt b eine erste Datenrate des ersten Sensors 30 und eine zweite Datenrate des zweiten Sensors 40 erfasst. Hierbei stehen die erste Datenrate und die zweite Datenrate in einem Verhältnis von 2ⁿ zueinander stehen, wobei n ein Element aus der Menge der natürlichen Zahlten N₀, also inklusive der Zahl Null, ist. Daraufhin wird in einem Verfahrensschritt c ein zentraler Timer 50 gestartet, welcher hochzählt und somit einen zeitlichen Wert aufweist. Über den zentralen Timer 50 ist es zudem möglich eine Altersbestimmung von ausgegebenen Messwerten durchzuführen. In einem anschließenden Verfahrensschritt d wird ein erster Countdown-Timer in Abhängigkeit des Werts des zentralen Timers 50 und der ersten Datenrate und ein zweiter Countdown-Timer in Abhängigkeit des Werts des zentralen Timers 50 und der zweiten Datenrate erzeugt. Anhand des ersten Countdown-Timers bzw. des zweiten Countdown-Timers kann genau ermittelt werden, bis wann der erste Messwert des ersten Sensors 30 bzw. der zweite Messwert des zweiten Sensors 40 vorhanden sein müssen. Der Verfahrensschritt d kann beispielsweise implementiert werden, indem der Wert des zentralen Timers 50 Bit-weise invertiert wird und abhängig von der Datenrate des Sensors die oberen Bits des invertierten Zählerwerts auf Null gesetzt werden. So kann beispielsweise der zentrale Timer 50 mit einer Frequenz von 25,6 kHz hochzählen und dann können bei einem Sensor mit einer Datenrate von 800Hz die unteren 5 Bits vom invertierten Wert des zentralen Timers als Countdown-Timer genommen und die restlichen Bits mit Null getrieben werden. Für einen Sensor mit 400 Hz werden dagegen beispielsweise nur die unteren 4 Bits als Countdown-Timer genommen. In einem folgenenden Verfahrensschritt e wird der erste Countdown-Timer dem ersten Sensor 30 und der zweite Countdown-Timer dem zweiten Sensor 40 zur Verfügung gestellt. Hierbei beginnt der erste Sensor 30 spätestens mit seiner Messung, wenn der Wert des ersten Countdown-Timers der ersten Latenz entspricht. Ebenso beginnt der zweite Sensor 40 spätestens mit der Messung, wenn der Wert des zweiten Countdown-Timers der zweiten Latenz entspricht. In einem anschließenden Verfahrensschritt f wird dann ein erster Messwert des ersten Sensors 30 und ein zweiter Messwert des zweiten Sensors 40 synchron ausgegeben. Die Verfahrensschritte a bis f laufen nacheinander ab, können in ihrer Reihenfolge jedoch auch teilweise vertauscht werden. So können die Verfahrensschritte a bis c beispielsweise beliebig vertauscht werden. Des Weiteren kann der Verfahrensschritt d so verschoben werden, dass er zumindest nach dem Verfahrensschritt b und c, jedoch vor dem Verfahrensschritt e abläuft.

Nach dem Verfahrensschritt f wird optional in einem Verfahrensschritt g der erste Sensor 30 in einen Schlafmodus versetzt, wenn die erste Latenz kleiner als der Kehrwert der ersten Datenrate ist, oder auch der zweite Sensor 40 in einen Schlafmodus versetzt, wenn die zweite Latenz kleiner als der Kehrwert der zweiten Datenrate ist. Durch die Bedingung, dass die Latenz kleiner als der Kehrwert der Datenrate ist, wird sichergestellt, dass die Zeitspanne zwischen dem Ansprechen des Sensors und dem Ausgeben eines Messwerts kleiner ist, als die Zeitspanne zwischen der jeweils ein Messwert des Sensors erfasst werden soll. Optional kann zwischen dem Verfahrensschritt d und dem Verfahrensschritt e noch ein Verfahrensschritt h ablaufen, in welchem der erste Sensor 30 spätestens aufgeweckt wird, wenn der Wert des ersten Countdown-Timers der ersten Latenz entspricht, oder auch in dem der zweite Sensor 40 spätestens aufgeweckt wird, wenn der Wert des zweiten Countdown-Timers der zweiten Latenz entspricht. Gegebenenfalls muss hierbei zusätzlich zur Latenz noch eine Zeitdauer berücksichtigt werden, bis der Sensor bereit ist, um mit einer Messung zu starten.
Nach den Verfahrensschritt f bzw. nach dem Verfahrensschritt g, falls dieser durchgeführt wird, wird das Verfahren beendet. Optional dazu kann das Verfahren beispielsweise mit dem Verfahrensschritt h aber auch mit dem Verfahrensschritt a weitergeführt werden.

In einem alternativen, bildlich nicht dargestellt Ausführungsbeispiel, kann nach dem Verfahrensschritt f noch ein weiterer Verfahrensschritt ablaufen, in dem der erste Messwert und der zweite Messwert zu einem Datenpaket zusammengefasst werden, wobei das Datenpaket vorzugsweise mit einem Zeitstempel versehen wird. In einem anschließenden Verfahrensschritt kann das Datenpaket optional noch an einen FIFO-Speicher 60 übermittelt werden, auf das beispielsweise mittels eines Computers von außen zugegriffen werden kann.

## Patentansprüche

1. Verfahren zur Sensorsynchronisierung mit folgenden Verfahrensschritten:
a) Bestimmen wenigstens einer ersten Latenz eines ersten Sensors (30) und einer zweiten Latenz eines zweiten Sensors (40),
b) Erfassen wenigstens einer ersten Datenrate des ersten Sensors (30) und einer zweiten Datenrate des zweiten Sensors (40), wobei die erste Datenrate zur zweiten Datenrate im Verhältnis von 2ⁿ steht, wobei n ein Element aus der Menge der natürlichen Zahlen N₀, inklusive der Zahl Null, ist,
c) Starten eines zentralen Timers (50),
d) Erzeugen eines Countdown-Timers in Abhängigkeit von einem Wert des zentralen Timers (50) und der ersten Datenrate, und Erzeugen eines zweiten Countdown-Timers in Abhängigkeit vom Wert des zentralen Timers (50) und der zweiten Datenrate, und
e) Bereitstellen des ersten Countdown-Timers für den ersten Sensor (30) und des zweiten Countdown-Timers für den zweiten Sensor (40), wobei der erste Sensor (30) spätestens mit der Messung beginnt, wenn die erste Latenz gleich dem Wert des ersten Countdown-Timers ist, und wobei der zweite Sensor (40) spätestens mit der Messung beginnt, wenn die zweite Latenz gleich dem Wert des zweiten Countdown-Timers ist.
f) Synchronisiertes Ausgeben eines ersten Messwerts des ersten Sensors (30) und eines zweiten Messwerts des zweiten Sensors (40).

2. Verfahren nach Anspruch 1, **dadurch gekennzeichnet, dass** die erste Latenz im Verfahrensschritt a bestimmt wird, indem die Zeitdauer vom Ansprechen des ersten Sensors (30) bis zur Ausgabe des ersten Messwerts gemessen wird, und/oder dass die zweite Latenz im Verfahrensschritt a) bestimmt wird, indem die Zeitdauer vom Ansprechen des zweiten Sensors (40) bis zur Ausgabe des zweiten Messwerts gemessen wird.

3. Verfahren nach Anspruch 1 oder 2, **dadurch gekennzeichnet, dass** die erste Latenz im Verfahrensschritt a) bestimmt wird, indem die Zeitdauer vom Ansprechen des ersten Sensors (30) bis zur Ausgabe des ersten Messwerts in Abhängigkeit der Konfiguration des ersten Sensors (30) aus einer Tabelle ermittelt wird, und/oder dass die zweite Latenz im Verfahrensschritt a bestimmt wird, indem die Zeitdauer vom Ansprechen des zweiten Sensors (40) bis zur Ausgabe des zweiten Messwerts in Abhängigkeit der Konfiguration des zweiten Sensors (40) aus einer Tabelle ermittelt wird.

4. Verfahren nach einem der Ansprüche 1 bis 3, **dadurch gekennzeichnet, dass** im Verfahrensschritt d), der erste Countdown-Timer und der zweite Countdown-Timer erzeugt werden, indem der Wert des zentralen Timers (50) Bit-weise invertiert wird und abhängig von der ersten Datenrate eine erste Anzahl an unteren Bits für den ersten Countdown-Timer und abhängig von der zweiten Datenrate eine zweite Anzahl an unteren Bits für den zweiten Countdown-Timer genutzt werden.

5. Verfahren nach einem der Ansprüche 1 bis 4, **dadurch gekennzeichnet, dass** der erste Sensor (30) nach Ausgabe des ersten Messwerts in einen Schlafmodus versetzt wird, wenn die erste Latenz kleiner als der Kehrwert der ersten Datenrate ist, und/oder dass der zweite Sensor (40) nach Ausgabe des zweiten Messwertes in einen Schlafmodus versetzt wird, wenn die zweite Latenz kleiner als der Kehrwert der zweiten Datenrate ist.

6. Verfahren nach einem der Ansprüche 1 bis 5, **dadurch gekennzeichnet, dass** der erste Sensor (30) spätestens aufgeweckt wird, wenn der Wert des ersten Countdown-Timers der ersten Latenz entspricht, und/oder dass der zweite Sensor (40) spätestens aufgeweckt wird, wenn der Wert des zweiten Countdown-Timers der zweiten Latenz entspricht.

7. Verfahren nach einem der Ansprüche 1 bis 6, **dadurch gekennzeichnet, dass** der erste Messwerte und der zweite Messwert, welche zeitgleich ausgegeben werden, zu einem Datenpaket zusammengefasst werden, wobei insbesondere das Datenpaket mit einem Zeitstempel versehen wird.

8. Verfahren nach Anspruch 7, **dadurch gekennzeichnet, dass** das Datenpaket an einen FIFO-Speicher (60) übermittelt wird.

9. Vorrichtung (10) zur Sensorsynchronisierung mit wenigstens einem ersten Sensor (30) und einem zweiten Sensor (40), einem zentralen Timer (50) und einer Verarbeitungseinheit (20), wobei die Vorrichtung (10) dazu eingerichtet ist, eine erste Latenz eines ersten Sensors (30) und eine zweite Latenz eines zweiten Sensors (40) zu bestimmen, und wobei der erste Sensor (30) dazu eingerichtet ist, einen ersten Messwert, und der zweite Sensor (40) dazu eingerichtet ist, einen zweiten Messwert synchron zueinander auszugeben,
**dadurch gekennzeichnet, dass**
die Verarbeitungseinheit (20) dazu eingerichtet ist,
- Eine erste Datenrate des ersten Sensor (30) sowie eine zweite Datenrate des zweiten Sensors (40) zu erfassen, wobei die erste Datenrate zur zweiten Datenrate im Verhältnis von 2ⁿ steht, wobei n ein Element aus der Menge der natürlichen Zahlen N₀, inklusive der Zahl Null, ist, und
- den zentralen Timer (50) zu starten, und
- einen ersten Countdown-Timer in Abhängigkeit von einem Wert des zentralen Timers (50) und der ersten Datenrate zu erzeugen sowie einen zweiten Countdown-Timer in Abhängigkeit vom Wert des zentralen Timers (50) und der zweiten Datenrate zu erzeugen, und
- den ersten Countdown-Timer für den ersten Sensor (30) sowie den zweiten Countdown-Timer für den zweiten Sensor (40) bereit zu stellen, wobei der erste Sensor (30) spätestens mit der Messung beginnt, wenn die erste Latenz gleich dem Wert des ersten Countdown-Timers ist, und wobei der zweite Sensor (40) spätestens mit der Messung beginnt, wenn die zweite Latenz gleich dem Wert des zweiten Countdown-Timers ist.

10. Vorrichtung (10) nach Anspruch 9, **dadurch gekennzeichnet, dass** der erste Sensor (30) oder die Verarbeitungseinheit (20) dazu eingerichtet ist, die erste Latenz durch Messung der Zeitdauer vom Ansprechen des ersten Sensors (30) bis zur Ausgabe des ersten Messwerts zu bestimmen, und/oder der zweite Sensor (40) oder die Verarbeitungseinheit (20) dazu eingerichtet ist, die zweite Latenz durch Messung der Zeitdauer vom Ansprechen des zweiten Sensors (40) bis zur Ausgabe des zweiten Messwerts zu bestimmen.

11. Vorrichtung (10) nach Anspruch 9 oder 10, **dadurch gekennzeichnet, dass** der erste Sensor (30) oder die Verarbeitungseinheit (20) dazu eingerichtet ist, die erste Latenz durch Ermittlung der Zeitdauer vom Ansprechen des ersten Sensors (30) bis zur Ausgabe des ersten Messwerts in Abhängigkeit der Konfiguration des ersten Sensors (30) aus einer Tabelle zu bestimmen und/oder der zweite Sensor (40) oder die Verarbeitungseinheit (20) dazu eingerichtet ist, die zweite Latenz durch Ermittlung der Zeitdauer vom Ansprechen des zweiten Sensors (40) bis zur Ausgabe des zweiten Messwerts in Abhängigkeit der Konfiguration des zweiten Sensors (40) aus einer Tabelle zu bestimmen.

12. Vorrichtung (10) nach einem der Ansprüche 9 bis 11, **dadurch gekennzeichnet, dass** der erste Sensor (30) dazu eingerichtet ist, nach Ausgabe des ersten Messwertes in einen Schlafmodus überzugehen, wenn die erste Latenz kleiner als der Kehrwert der ersten Datenrate ist, und/oder dass der zweite Sensor (40) dazu eingerichtet ist, nach Ausgabe des zweiten Messwertes in einen Schlafmodus überzugehen, wenn die zweite Latenz kleiner als der Kehrwert der zweiten Datenrate ist.

13. Vorrichtung (10) nach einem der Ansprüche 9 bis 12, **dadurch gekennzeichnet, dass** der erste Sensor (30) dazu eingerichtet ist, spätestens aufgeweckt zu werden, wenn der Wert des ersten Countdown-Timers der ersten Latenz entspricht, und/oder dass der zweite Sensor (40) dazu eingerichtet ist, spätestens aufgeweckt zu werden, wenn der Wert des zweiten Countdown-Timers der zweiten Latenz entspricht.

14. Vorrichtung (10) nach einem der Ansprüche 9 bis 13, **dadurch gekennzeichnet, dass** die Vorrichtung (10) einen FIFO-Speicher (60) aufweist, wobei die Verarbeitungseinheit (20) dazu eingerichtet ist, den ersten Messwert und den zweiten Messwert, welche gleichzeitig ausgegeben werden, als Datenpakete an den FIFO-Speicher (60) zu übermitteln, wobei das Datenpaket insbesondere mit einem Zeitstempel versehen ist.

## Claims

1. Sensor synchronization method having the following method steps:
a) determining at least a first latency of a first sensor (30) and a second latency of a second sensor (40),
b) capturing at least a first data rate of the first sensor (30) and a second data rate of the second sensor (40), wherein the first data rate is in a ratio of 2ⁿ with respect to the second data rate, where n is an element from the set of natural numbers N₀, including the number zero,
c) starting a central timer (50),
d) generating a countdown timer on the basis of a value of the central timer (50) and the first data rate, and generating a second countdown timer on the basis of the value of the central timer (50) and the second data rate, and
e) providing the first countdown timer for the first sensor (30) and the second countdown timer for the second sensor (40), wherein the first sensor (30) begins the measurement at the latest when the first latency is equal to the value of the first countdown timer, and wherein the second sensor (40) begins the measurement at the latest when the second latency is equal to the value of the second countdown timer,
f) outputting a first measured value from the first sensor (30) and a second measured value from the second sensor (40) in a synchronized manner.

2. Method according to Claim 1, **characterized in that** the first latency is determined in method step a) by measuring the period from the response of the first sensor (30) to the output of the first measured value, and/or **in that** the second latency is determined in method step a) by measuring the period from the response of the second sensor (40) to the output of the second measured value.

3. Method according to Claim 1 or 2, **characterized in that** the first latency is determined in method step a) by determining the period from the response of the first sensor (30) to the output of the first measured value on the basis of the configuration of the first sensor (30) from a table, and/or **in that** the second latency is determined in method step a) by determining the period from the response of the second sensor (40) to the output of the second measured value on the basis of the configuration of the second sensor (40) from a table.

4. Method according to one of Claims 1 to 3, **characterized in that** the first countdown timer and the second countdown timer are generated in method step d) by inverting the value of the central timer (50) in a bit-by-bit manner and using a first number of lower bits for the first countdown timer on the basis of the first data rate and using a second number of lower bits for the second countdown timer on the basis of the second data rate.

5. Method according to one of Claims 1 to 4, **characterized in that** the first sensor (30) is changed to a sleep mode after outputting the first measured value if the first latency is less than the reciprocal of the first data rate, and/or **in that** the second sensor (40) is changed to a sleep mode after outputting the second measured value if the second latency is less than the reciprocal of the second data rate.

6. Method according to one of Claims 1 to 5, **characterized in that** the first sensor (30) is woken up at the latest when the value of the first countdown timer corresponds to the first latency, and/or **in that** the second sensor (40) is woken up at the latest when the value of the second countdown timer corresponds to the second latency.

7. Method according to one of Claims 1 to 6, **characterized in that** the first measured value and the second measured value, which are output at the same time, are combined to form a data packet, wherein the data packet is provided with a time stamp, in particular.

8. Method according to Claim 7, **characterized in that** the data packet is transmitted to a FIFO memory (60) .

9. Sensor synchronization apparatus (10) having at least a first sensor (30) and a second sensor (40), a central timer (50) and a processing unit (20), wherein the apparatus (10) is configured to determine a first latency of a first sensor (30) and a second latency of a second sensor (40), and wherein the first sensor (30) is configured to output a first measured value and the second sensor (40) is configured to output a second measured value in sync with one another,
**characterized in that**
the processing unit (20) is configured
- to capture a first data rate of the first sensor (30) and a second data rate of the second sensor (40), wherein the first data rate is in a ratio of 2ⁿ with respect to the second data rate, where n is an element from the set of natural numbers N₀, including the number zero, and
- to start the central timer (50), and
- to generate a first countdown timer on the basis of a value of the central timer (50) and the first data rate and to generate a second countdown timer on the basis of the value of the central timer (50) and the second data rate, and
- to provide the first countdown timer for the first sensor (30) and to provide the second countdown timer for the second sensor (40), wherein the first sensor (30) begins the measurement at the latest when the first latency is equal to the value of the first countdown timer, and wherein the second sensor (40) begins the measurement at the latest when the second latency is equal to the value of the second countdown timer.

10. Apparatus (10) according to Claim 9, **characterized in that** the first sensor (30) or the processing unit (20) is configured to determine the first latency by measuring the period from the response of the first sensor (30) to the output of the first measured value, and/or the second sensor (40) or the processing unit (20) is configured to determine the second latency by measuring the period from the response of the second sensor (40) to the output of the second measured value.

11. Apparatus (10) according to Claim 9 or 10, **characterized in that** the first sensor (30) or the processing unit (20) is configured to determine the first latency by determining the period from the response of the first sensor (30) to the output of the first measured value on the basis of the configuration of the first sensor (30) from a table, and/or the second sensor (40) or the processing unit (20) is configured to determine the second latency by determining the period from the response of the second sensor (40) to the output of the second measured value on the basis of the configuration of the second sensor (40) from a table.

12. Apparatus (10) according to one of Claims 9 to 11, **characterized in that** the first sensor (30) is configured to change to a sleep mode after outputting the first measured value if the first latency is less than the reciprocal of the first data rate, and/or **in that** the second sensor (40) is configured to change to a sleep mode after outputting the second measured value if the second latency is less than the reciprocal of the second data rate.

13. Apparatus (10) according to one of Claims 9 to 12, **characterized in that** the first sensor (30) is configured to be woken up at the latest when the value of the first countdown timer corresponds to the first latency, and/or **in that** the second sensor (40) is configured to be woken up at the latest when the value of the second countdown timer corresponds to the second latency.

14. Apparatus (10) according to one of Claims 9 to 13, **characterized in that** the apparatus (10) has a FIFO memory (60), wherein the processing unit (20) is configured to transmit the first measured value and the second measured value, which are output at the same time, as data packets to the FIFO memory (60), wherein the data packet is provided with a time stamp, in particular.

## Revendications

1. Procédé de synchronisation de capteurs comprenant les étapes suivantes :
a) déterminer au moins une première latence d'un premier capteur (30) et une deuxième latence d'un deuxième capteur (40),
b) détecter au moins un premier débit de données du premier capteur (30) et un deuxième débit de données du deuxième capteur (40), un rapport du premier débit de données sur le deuxième débit de données étant égal à 2ⁿ, n étant un élément de l'ensemble des nombres naturels N₀, y compris le nombre zéro,
c) démarrer un compteur central (50),
d) générer un décompteur en fonction d'une valeur du compteur central (50) et du premier débit de données, et générer un deuxième décompteur en fonction de la valeur du compteur central (50) et du deuxième débit de données, et
e) fournir le premier décompteur pour le premier capteur (30) et le deuxième décompteur pour le deuxième capteur (40), le premier capteur (30) commençant la mesure au plus tard lorsque la première latence est égale à la valeur du premier décompteur et
le deuxième capteur (40) commençant la mesure au plus tard lorsque la deuxième latence est égale à la valeur du deuxième décompteur,
f) fournir en sortie de manière synchronisée une première valeur de mesure du premier capteur (30) et une deuxième valeur de mesure du deuxième capteur (40).

2. Procédé selon la revendication 1, **caractérisé en ce que** la première latence est déterminée lors de l'étape de procédé a) en mesurant la période de temps s'écoulant entre la réponse du premier capteur (30) et la fourniture en sortie de la première valeur de mesure, et/ou **en ce que** la deuxième latence est déterminée lors de l'étape de procédé a) en mesurant la période de temps s'écoulant entre la réponse du deuxième capteur (40) et la fourniture en sortie de la deuxième valeur de mesure.

3. Procédé selon la revendication 1 ou 2, **caractérisé en ce que** la première latence est déterminée lors de l'étape de procédé a) en déterminant la période de temps s'écoulant entre la réponse du premier capteur (30) et la fourniture en sortie de la première valeur de mesure en fonction de la configuration du premier capteur (30) provenant d'une table, et/ou **en ce que** la deuxième latence est déterminée lors de l'étape de procédé a) en déterminant la période de temps s'écoulant entre la réponse du deuxième capteur (40) et la fourniture en sortie de la deuxième valeur de mesure en fonction de la configuration du deuxième capteur (40) provenant d'une table.

4. Procédé selon l'une des revendications 1 à 3, **caractérisé en ce que**, lors de l'étape de procédé d), le premier décompteur et le deuxième décompteur sont générés en inversant bit par bit la valeur du compteur central (50) et en utilisant un premier nombre de bits de poids faible en fonction du premier débit de données pour le premier décompteur et en utilisant un deuxième nombre de bits de poids faible en fonction du deuxième débit de données pour le deuxième décompteur.

5. Procédé selon l'une des revendications 1 à 4, **caractérisé en ce que** le premier capteur (30) est amené à passer en mode de veille après la fourniture en sortie de la première valeur de mesure lorsque la première latence est inférieure à l'inverse du premier débit de données, et/ou **en ce que** le deuxième capteur (40) est amené à passer en mode de veille après la fourniture en sortie de la deuxième valeur de mesure -lorsque la deuxième latence est inférieure à l'inverse du deuxième débit de données.

6. Procédé selon l'une des revendications 1 à 5, **caractérisé en ce que** le premier capteur (30) est réactivé au plus tard lorsque la valeur du premier décompteur correspond à la première latence, et/ou **en ce que** le deuxième capteur (40) est réactivé au plus tard lorsque la valeur du deuxième décompteur correspond à la deuxième latence.

7. Procédé selon l'une des revendications 1 à 6, **caractérisé en ce que** les premières valeurs de mesure et la deuxième valeur de mesure, qui sont fournies en sortie simultanément, sont regroupées pour constituer un paquet de données, le paquet de données étant en particulier pourvu d'un marqueur temporel.

8. Procédé selon la revendication 7, **caractérisé en ce que** le paquet de données est transmis à une mémoire FIFO (60).

9. Dispositif (10) de synchronisation de capteurs comprenant au moins un premier capteur (30) et un deuxième capteur (40), un compteur central (50) et une unité de traitement (20), dans lequel le dispositif (10) est conçu pour déterminer une première latence d'un premier capteur (30) et une deuxième latence d'un deuxième capteur (40), et dans lequel le premier capteur (30) est conçu pour fournir en sortie une première valeur de mesure et le deuxième capteur (40) est conçu pour fournir en sortie une deuxième valeur de mesure en synchronisme l'une avec l'autre, **caractérisé en ce que** l'unité de traitement (20) est conçue pour
- détecter un premier débit de données du premier capteur (30) et un deuxième débit de données du deuxième capteur (40), le rapport du premier débit de données sur le deuxième débit de données étant égal à 2ⁿ, n étant un élément de l'ensemble des nombres naturels N₀, y compris le nombre zéro, et
- démarrer le compteur central (50), et
- générer un premier décompteur en fonction d'une valeur du compteur central (50) et du premier débit de données, et générer un deuxième décompteur en fonction de la valeur du compteur central (50) et du deuxième débit de données, et
- fournir le premier décompteur pour le premier capteur (30) et le deuxième décompteur pour le deuxième capteur (40), le premier capteur (30) commençant la mesure au plus tard lorsque la première latence est égale à la valeur du premier décompteur, et
le deuxième capteur (40) commençant la mesure au plus tard lorsque la deuxième latence est égale à la valeur du deuxième décompteur.

10. Dispositif (10) selon la revendication 9, **caractérisé en ce que** le premier capteur (30) ou l'unité de traitement (20) est conçu pour déterminer la première latence en mesurant la période de temps s'écoulant entre la réponse du premier capteur (30) et la fourniture en sortie de la première valeur de mesure, et/ou **en ce que** le deuxième capteur (40) ou l'unité de traitement (20) est conçu pour déterminer la deuxième latence en mesurant la période de temps s'écoulant entre la réponse du deuxième capteur (40) et la fourniture en sortie de la deuxième valeur de mesure.

11. Dispositif (10) selon la revendication 9 ou 10, **caractérisé en ce que** le premier capteur (30) ou l'unité de traitement (20) est conçu pour déterminer la première latence en déterminant la période de temps s'écoulant entre la réponse du premier capteur (30) et la fourniture en sortie de la première valeur de mesure en fonction de la configuration du premier capteur (30) provenant d'une table et/ou **en ce que** le deuxième capteur (40) ou l'unité de traitement (20) est conçu pour déterminer la deuxième latence en déterminant la période de temps s'écoulant entre la réponse du deuxième capteur (40) et la fourniture en sortie de la deuxième valeur de mesure en fonction de la configuration du deuxième capteur (40) provenant d'une table.

12. Dispositif (10) selon l'une des revendications 9 à 11, **caractérisé en ce que** le premier capteur (30) est conçu pour passer en mode de veille après la fourniture en sortie de la première valeur de mesure lorsque la première latence est inférieure à l'inverse du premier débit de données, et/ou **en ce que** le deuxième capteur (40) est conçu pour passer en mode de veille après la fourniture en sortie de la deuxième valeur de mesure lorsque la deuxième latence est inférieure à l'inverse du deuxième débit de données.

13. Dispositif (10) selon l'une des revendications 9 à 12, **caractérisé en ce que** le premier capteur (30) est conçu pour être réactivé au plus tard lorsque la valeur du premier décompteur correspond à la première latence, et/ou **en ce que** le deuxième capteur (40) est conçu pour être réactivé au plus tard lorsque la valeur du deuxième décompteur correspond à la deuxième latence.

14. Dispositif (10) selon l'une des revendications 9 à 13, **caractérisé en ce que** le dispositif (10) comprend une mémoire FIFO (60), dans lequel l'unité de traitement (20) est conçue pour transmettre à la mémoire FIFO (60) la première valeur de mesure et la deuxième valeur de mesure, qui sont fournies en sortie simultanément, sous forme de paquets de données, le paquet de données étant en particulier pourvu d'un marqueur temporel.
